# EUROPEAN PATENT APPLICATION

(11) **EP 4 697 437 A1**
(43) Date of publication of application: **18.02.2026**
(21) Application number: 24788786.2
(22) Date of filing: 11.04.2024
(51) Int. Cl.: H01M 10/0587, H01M 4/13, H01M 50/443, H01M 50/449, H01M 50/46

(54) **SECONDARY BATTERY**

(30) Priority: 14.04.2023 JP 2023066579
(71) Applicant: Panasonic Intellectual Property Management Co., Ltd., Kadoma-shi, Osaka 571-0057 (JP)
(72) Inventor: KURODA, Yuta, Kadoma-shi, Osaka 571-0057 (JP); NAMBUYA, Arisa, Kadoma-shi, Osaka 571-0057 (JP)
(74) Representative: Eisenführ Speiser
(86) International application number: PCT/JP2024/014638
(87) International publication number: WO 2024/214763

(57) **Abstract**

A secondary battery includes a first electrode and a second electrode overlapped together, with a separator interposed therebetween. The first electrode includes a belt-shaped current collector, and a mixture layer disposed on the current collector. The first electrode has an end part including one end in the width direction, and a main part other than the end part, the end part having an exposed portion where the current collector is exposed without the mixture layer formed on the surface of the current collector. The separator includes a porous substrate layer, and a protective layer containing resin particles and covering the porous substrate layer. When the separator is divided into a first region facing the main part and a second region facing the end part, an exposed area A1 per one resin particle exposed on the surface of the separator in the first region is larger than an exposed area A2 per one resin particle exposed on the surface of the separator in the second region.

## Description

### [Technical Field]

The present disclosure relates to a secondary battery.

### [Background Art]

In recent years, as high-power and high-energy density secondary batteries, nonaqueous electrolyte secondary batteries including an electrode body in which a positive electrode and a negative electrode are arranged facing each other with a separator interposed therebetween have been widely used.

For example, Patent Literature 1 proposes "a nonaqueous electrolyte solution secondary battery including an electrode body in which a positive electrode sheet and a negative electrode sheet are overlapped together, with a separator sheet interposed therebetween, wherein a porous layer having an inorganic filler and a binder is formed on at least one surface of the separator sheet, the porous layer has a surface formed unevenly, and a maximum height difference of the uneven surface is 0.2 µm to 1.7 µm."

### [Citation List]

### [Patent Literature]

Patent Literature 1: Domestic re-publication of PCT international application No. 2011/158335

### [Summary of Invention]

### [Technical Problem]

In the positive electrode or negative electrode, an exposed portion (non-mixture portion) where the current collector is exposed without having a mixture layer can be arranged for connection with a lead tab. The exposed portion can be arranged at one end in the width direction (lateral direction). In this case, when the positive electrode and the negative electrode are overlapped together, with a separator interposed therebetween, the separator is compressed due to a step formed at the boundary between the exposed portion and the mixture layer. In the compressed state, the separator tends to break.

### [Solution to Problem]

One aspect of the present disclosure relates to a secondary battery, including: a first electrode, a second electrode, an electrolyte, and a separator, wherein: the first electrode and the second electrode are overlapped together, with the separator interposed between the first electrode and the second electrode; the first electrode includes a belt-shaped current collector, and a mixture layer disposed on the current collector; the first electrode has an end part including one end in a width direction, and a main part other than the end part, the end part having an exposed portion where the current collector is exposed without the mixture layer formed on a surface of the current collector; the separator includes a porous substrate layer, and a protective layer configured to contain resin particles and covering the porous substrate layer; and when the separator is divided in two in the width direction, into a first region facing the main part and a second region facing the end part, an exposed area A1 per one resin particle exposed on a surface of the separator in the first region is larger than an exposed area A2 per one resin particle exposed on the surface of the separator in the second region.

### [Advantageous Effects of Invention]

According to the present disclosure, in a secondary battery including a wound electrode group, when a current collector-exposed portion without a mixture layer is present at an end part of the electrode, it is possible to suppress the breakage of the separator.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic sectional view of a secondary battery according to one example of an embodiment.
[FIG. 2] A schematic plan view of a positive electrode according to one example of an embodiment.
[FIG. 3] A schematic plan view of a separator according to one example of an embodiment.
[FIG. 4] A schematic sectional view illustrating the positive electrode of FIG. 2 and the separator of FIG. 3 when overlapped together.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure encompasses a combination of matters recited in any two or more claims selected from plural claims in the appended claims. In other words, as long as no technical contradiction arises, matters recited in any two or more claims selected from plural claims in the appended claims can be combined.

Secondary batteries include nonaqueous electrolyte secondary batteries, such as lithium-ion secondary batteries, lithium-metal secondary batteries, and solid-state batteries containing a gel electrolyte or a solid electrolyte. That is, secondary batteries may be liquid secondary batteries containing an electrolyte solution as an electrolyte, and may be all-solid-state secondary batteries containing a solid electrolyte.

A secondary battery according to one embodiment of the present disclosure includes a first electrode, a second electrode, an electrolyte, and a separator. The first electrode and the second electrode are overlapped together, with the separator interposed therebetween. The secondary battery may include a wound electrode group in which a first electrode and a second electrode are wound together, with a separator interposed therebetween. The outer shape of the wound electrode group is columnar, and may be, for example, cylindrical. The configuration of the electrode group is not limited thereto, and may include a stacked electrode group in which a positive electrode and a negative electrode are stacked together, with a separator interposed therebetween.

Of the first and second electrodes, at least the first electrode includes a belt-shaped current collector, and a mixture layer disposed on the current collector. The first electrode has an end part including one end in the width direction, and a main part other than the end part. The end part has an exposed portion (a mixture layer non-forming portion) where the current collector is exposed without the mixture layer formed on the surface of the current collector. The exposed portions may be provided in plural numbers intermittently along the length direction.

A step is formed at the boundary between the exposed portion and the mixture layer. As the electrode expands in association with charging and discharging, the separator undergoes pressure. At this time, the separator is compressed at the portion in contact with the step, tending to cause the separator to break.

Moreover, since the exposed portion is a portion to which a lead tab and a protective tape for protecting the lead tab are attached, a step is also formed at the boundary between the exposed portion and the lead tab or the protective tape. Therefore, the separator is compressed also by the step formed with the lead tab or the protective tape, tending to cause the separator to break.

The separator includes a porous substrate layer, and a protective layer configured to contain resin particles and covering the porous substrate layer. The protective layer is softer than the porous substrate layer, and has an effect of relaxing the pressure applied to the separator, and at the step portions, the protective layer is compressed, to suppress the compression of the porous substrate layer. This can suppress the breakage of the separator.

Here, the separator is divided in two in the width direction, into a first region facing the main part and a second region facing the end part. At this time, an exposed area A1 per one resin particle exposed on the surface of the separator in the first region is larger than an exposed area A2 per one resin particle exposed on the surface of the separator in the second region (A1>A2).

The second region facing the end part includes a region facing the lead tab (and the protective tape). The thickness of the lead tab (and the protective tape) is usually thicker than the thickness of the mixture layer. Accordingly, the height of the step formed with the lead tab or the protective tape is also higher than the step formed with the mixture layer. In this case, by setting an exposed area A per one resin particle exposed on the surface of the separator to be larger in the first region than in the second region, the breakage of the separator can be further suppressed.

The exposed area A per one resin particle exposed on the surface of the separator, when not having a heat-resistant layer as described later, is equal to the covering area per one resin particle covering the current collector. The larger the average size of the resin particles (the larger the average particle diameter) is, the larger the exposed area A is. The resin particles form protrusions protruding from the surface of the separator. When the exposed area A is large, the height of the protrusions is also large as the particle diameter of the resin particles is large. The exposed area A1 in the first region being larger than the exposed area A2 in the second region also means that a height h1 of the protrusions of the resin particles in the first region is higher than a height h2 of the protrusions of the resin particles in the second region.

As described above, a total thickness H_{L} of the lead tab and the protective tape that face the second region is usually thicker than a thickness H_{M} of the mixture layer that faces the first region (H_{L} > H_{M}). Therefore, when overlapping the separator on the first electrode, due to the difference in the maximum thickness of the electrode between the main part and the end part, the separator tends to be bent and folded under compression force near the boundary between the main part and a region in the end part where the lead tab is provided.

However, by setting to h1 > h2, the difference between H_{M}+h1, which is a total thickness of the mixture layer in the main part and the height of the protrusions of the resin particles in the first region, and H_{L}+h2, which is a total thickness of the lead tab and the protective tape in the end part and the height of the protrusions of the resin particles in the second region, can be reduced. This reduces the difference in the total thickness of the electrode and separator, between the first region and the second region. Thus, when the separator is overlapped on the electrode, the folding of the separator at the boundary between the first region and the second region can be suppressed, and the breakage of the separator can be suppressed.

The protective layer of the separator may have a heat-resistant layer containing inorganic particles, in addition to the resin particles. The heat-resistant layer can impart heat resistance to the separator, and can improve the safety of the secondary battery. The thickness of the heat-resistant layer may be 0.1 µm or more and 10 µm or less.

**In** the protective layer having a heat-resistant layer, the resin particles may be present in a dispersed state in the heat-resistant layer. The thickness of the heat-resistant layer may be thinner than the average particle diameter of the resin particles. In this case, in the individual resin particles, at least part of each of the resin particles is protruded from the heat-resistant layer and exposed on the surface of the separator, forming a protrusion. The exposed area of the exposed protrusion corresponds to the aforementioned exposed area A per one resin particle.

The protruding height (the height of the protrusions) of the resin particles protruding from the surface of the separator is, for example, 0.1 µm or more and 10 µm or less in the first region. The protruding height of the resin particles can be determined by obtaining a scanning electron microscope (SEM) image, for a cross section of the separator taken out from the secondary battery by a later-described method. The height of the protrusions protruding from the surface of the separator for a plurality of (e.g., 100 or more) resin particles is obtained through image analysis, and the average value of the heights of the protrusions is determined as the protruding height of the resin particles.

The protruding height of the resin particles, when the protective layer has no heat-resistant layer, is equal to the average particle diameter of the resin particles. When the protective layer has a heat-resistant layer, the protruding height of the resin particles is approximately equal to a value obtained by subtracting the thickness of the heat-resistant layer from the average particle diameter of the resin particles. The average particle diameter of the resin particles and the thickness of the heat-resistant layer may be obtained through image analysis, from which the protruding height may be derived.

The protruding height of the resin particles protruding from the surface of the separator in the second region (the height h2 of the protrusions) is lower than the protruding height of the resin particles protruding from the surface of the separator in the first region (the height h1 of the protrusions). The protruding height of the resin particles in the second region can be determined in consideration of the thickness of the lead tab and the protective tape, and the thickness of the mixture layer, such that the difference (h1-h2) between the protruding height of the resin particles in the first region and the protruding height of the resin particles in the second region becomes approximately equal to the difference (H_{L}-H_{M}) between the aforementioned H_{L} and H_{M}.

The exposed area A1 in the first region is, for example, 1 µm² or more and 80 µm² or less. The exposed area A1 may be 3.5 µm² or more and 80 µm² or less, 50 µm² or more and 80 µm² or less, or 50 µm² or more and 71 µm² or less. In this case, the effect of suppressing the breakage of the separator can be remarkable when the ratio A1/A2 of the exposed area A1 in the first region to the exposed area A2 in the second region is 1.5 or more and 4 or less, which is preferable.

The exposed areas A1 and A2 can be determined, as shown below, by acquiring a scanning electron microscope (SEM) image (hereinafter simply referred to as a "SEM image") of a surface of the separator taken out from the secondary battery, and performing image processing on the SEM image. For the SEM observation, for example, a measurement region of 100 µm × 100 µm is photographed at a magnification of 500 to 3000 times. The separator may be taken out from the secondary battery in a fully charged state, and may be taken out from the secondary battery in a discharged state. The separator taken out from the secondary battery, before subjected to measurement, is washed with dimethyl carbonate (DMC) and dried.

In the SEM image, the region occupied by the individual resin particle is taken as the exposed area of the resin particle. With respect to each of the resin particles, the exposed area is determined by image processing. The average of the exposed areas of the resin particles in the measurement region is determined as an exposed area A per one resin particle. In the image analysis, the SEM image may be binarized so that the resin particles are shown in black (or white) and the rest is shown in white (or black).

The exposed area A1 is obtained by selecting a measurement region of 100 µm × 100 µm in the first region, and determining the exposed area A per one resin particle by the above method. Likewise, the exposed area A2 is obtained by selecting a measurement region of 100 µm × 100 µm in the second region, and determining the exposed area A per one resin particle by the above method.

**In** the following, each component constituting a secondary battery according to an embodiment of the present disclosure will be described in detail. In the following, a description will be given with the first electrode having the above-described main part and end part, taken as a positive electrode. The present invention, however, is not limited thereto, and the first electrode may be a negative electrode. Both of the positive electrode and the negative electrode may be an electrode having the above-described main part and end part.

### [Positive electrode]

The positive electrode includes a belt-shaped positive electrode current collector, and a positive electrode mixture layer disposed on the positive electrode current collector. The positive electrode mixture layer may be in the form of film. The positive electrode includes a positive electrode current collector, and a positive electrode mixture layer formed (or supported) on a partial region of a surface of the positive electrode current collector. Specifically, the positive electrode has a positive electrode end part including one end in the lateral direction of the positive electrode, and a positive electrode main part other than the positive electrode end part. The positive electrode end part has an exposed portion of the positive electrode current collector intermittently provided at a plurality of positions along the longitudinal direction of the positive electrode current collector. The exposed portion of the positive electrode current collector is without the positive electrode mixture layer from the one end in the lateral direction through to the positive electrode main part.

The positive electrode mixture layer is constituted of a positive electrode mixture. The positive electrode mixture contains a positive electrode active material as an essential component. The positive electrode mixture layer, therefore, may be called a positive electrode active material layer. The positive electrode mixture layer is supported on one surface or both surfaces of the positive electrode current collector.

The positive electrode mixture contains a positive electrode active material as an essential component, and may contain, as optional components, a binder, a conductive agent, a thickener, and the like. The positive electrode active material can be a material that reversibly absorbs and releases lithium ions. The positive electrode active material may be, for example, a lithium-containing transition metal oxide. Typical examples of the lithium-containing transition metal oxide include lithium cobalt oxide and lithium nickel oxide, which have a layered rock-salt type crystal structure.

The positive electrode mixture layer may be formed by, for example, applying a positive electrode slurry in which a positive electrode mixture containing particles of a positive electrode active material as an essential component and optional components (binder, conductive agent, etc.) is dispersed in a dispersion medium, onto a surface of a positive electrode current collector, followed by drying. The applied film after drying may be rolled, as necessary. The positive electrode mixture layer may be formed on one surface or both surfaces of the positive electrode current collector. As the dispersion medium of the positive electrode slurry, N-methyl-2-pyrrolidone (NMP) and the like are used.

As the positive electrode active material, for example, a composite oxide containing lithium and a transition metal, such as Ni, Co, and Mn, can be used. Examples thereof include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMPO₄, and Li₂MPO₄F, where M is at least one selected from the group consisting of Na, Mg, Sc, Y, Mn, Fe, Co, Ni, Cu, Zn, Al, Cr, Pb, Sb, and B. Here, 0 < a ≤ 1.2, 0 < b ≤ 0.9, and 2.0 ≤ c2.3. The value "a" representing the molar ratio of lithium increases and decreases during charging and discharging.

In particular, preferred is a lithium-nickel composite oxide represented by LiₐNi_{b}Me_{1-b}O₂, where M is at least one selected from the group consisting of Mn, Co, and Al, 0 < a ≤ 1.2, and 0.3 ≤ b < 1. From the viewpoint of achieving high capacity, more preferably, 0.85 ≤ b < 1 is satisfied. From the viewpoint of the stability of the crystal structure, more preferred is LiₐNi_{b}Co_{c}Al_{d}O₂ containing Co and Al as the element represented by M, where 0 < a ≤ 1.2, 0.85 ≤ b < 1, 0 < c < 0.15, 0 < d ≤ 0.1, and b+c+d = 1.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; and polyethersulfone. The binder may be used singly or in combination of two or more kinds.

Examples of the conductive agent include carbon materials, such as graphite, carbon black, such as acetylene black, and carbon fibers (carbon nanotubes (CNTs), carbon fibers other than CNTs). The conductive agent may be used singly or in combination of two or more kinds.

The positive electrode current collector that can be used include a non-porous conductive substrate (metal foil, etc.) and a porous conductive substrate (mesh, net, punched sheet, etc.). Examples of the material of the positive electrode current collector include stainless steel, aluminum, aluminum alloy, and titanium. The thickness of the positive electrode current collector is, although not particularly limited to, preferably 1 to 50 µm, more desirably 5 to 20 µm.

### [Negative electrode]

The negative electrode includes a belt-shaped negative electrode current collector. The negative electrode may have a negative electrode current collector, and a negative electrode mixture layer or a negative electrode active material layer formed (or supported) on the entire or a partial region of a surface of the negative electrode current collector. The negative electrode mixture layer or the negative electrode active material layer may be in the form of film. The negative electrode mixture layer or the negative electrode active material layer is supported on one surface or both surfaces of the negative electrode current collector.

The negative electrode mixture layer is constituted of a negative electrode mixture. The negative electrode active material layer is constituted of a negative electrode mixture or a negative electrode active material. The negative electrode mixture contains a negative electrode active material as an essential component. The negative electrode mixture layer, therefore, may be called a negative electrode active material layer. The negative electrode active material may be a material that reversibly absorbs and releases lithium ions, which may be lithium metal, or may be lithium alloy. The negative electrode active material layer constituted of a material other than the negative electrode mixture is constituted of at least one selected from the group consisting of lithium metal and lithium alloy. The negative electrode mixture layer or the negative electrode active material layer is supported on one surface or both surfaces of the negative electrode current collector.

The negative electrode mixture contains a negative electrode active material as an essential component, and may contain, as optional components, a binder, a conductive agent, a thickener, and the like. Such a negative electrode mixture layer can be formed by, for example, applying a negative electrode slurry in which a negative electrode mixture containing particles of a negative electrode active material as an essential component and optional components are dispersed in a dispersion medium, onto a surface of a negative electrode current collector, followed by drying. The applied film after drying may be rolled, as necessary.

When the negative electrode has a negative electrode mixture layer, an alloy-forming material may be contained in the negative electrode mixture layer. The alloy-forming material contains a phase that reversibly forms an alloy with lithium. The phase that reversibly forms an alloy with lithium may be, for example, silicon (silicon phase). Such a phase undergoes considerably severe expansion and contraction during charging and discharging. The content ratio of the alloy-forming material in the negative electrode mixture layer may be set higher at the negative electrode end part than at the negative electrode main part. By this, the expansion rate of the negative electrode can be easily made larger at the negative electrode end part than at the negative electrode main part.

**In** the category of the alloy-forming material, a Si-containing material, a Sncontaining material, Si, Sn, Si alloy, Sn alloy, and the like are included. In particular, a Si-containing material has high capacity and is suitable as the negative electrode active material. The Si-containing material contains a silicon phase. Silicon is capable of reversibly forming an alloy with lithium. The Si-containing material is a material that can reversibly absorb and release lithium ions.

The silicon-containing material may be composite particles each containing silicon phases, and a matrix phase in which the silicon phases are dispersed. The matrix phase may be constituted of a material having lithium ion conductivity. The matrix phase includes, for example, at least one selected from the group consisting of a silicon oxide phase and a carbon phase.

The silicon oxide phase contains Si and O, and may further contain a third element other than Si and O. The silicon oxide phase may be constituted of SiO₂, may be constituted of lithium silicate, and may be constituted of both.

The composite particles as the silicon-containing material (composite particles each containing silicon phases and a matrix phase in which the silicon phases are dispersed) may be, for example, in any of the following forms (a) to (c).

(a) First composite particles each containing silicon phases, and a silicon dioxide (SiO₂) phase in which the silicon phases are dispersed.
(b) Second composite particles each containing silicon phases, and a lithium silicate phase in which the silicon phases are dispersed.
(c) Third composite particles each containing silicon phases, and a carbon phase in which the silicon phases are dispersed.

The first composite particles (containing a silicon dioxide (SiO₂) phase and silicon phases dispersed in the silicon dioxide (SiO₂) phase) are superior in that the stability is high among the silicon-containing materials, and their changes in volume are small. The high stability is considered to be attributed to that the particle diameter of the silicon phases (or silicon particles) dispersed in the silicon dioxide phase is small, and deep charging is unlikely to proceed. The silicon dioxide phase includes relatively many sites that irreversibly trap lithium ions. Therefore, among the silicon-containing materials, the first composite particles tend to have a large irreversible capacity, but in return, are highly structurally stable, and their changes in volume are likely to be suppressed.

The first composite particles can be synthesized by, for example, heating a raw material silicon oxide in a non-oxidizing atmosphere, to allow a disproportionation reaction to proceed. **In** the disproportionation reaction, silicon fine particles can be uniformly produced in the silicon dioxide phase. The average particle diameter of the silicon fine particles produced through the disproportionation reaction is, for example, less than 100 nm, and can be 5 nm to 50 nm. For example, 95 to 100 mass% of the matrix phase of the first composite particles can be constituted of silicon dioxide. The overall composition of the first composite particles can be represented by a general formula SiOₓ, where 0 < x < 2, preferably 0.5 ≤ x ≤ 1.5.

The content ratio of the silicon phases in the first composite particles can be, for example, 20 mass% to 60 mass%.

The second composite particles (containing a lithium silicate phase and silicon phases dispersed in the lithium silicate phase) are superior in that the irreversible capacity is small among the silicon-containing materials. With the second composite particles, excellent charge-discharge efficiency can be obtained. Especially, the effect is remarkable in the initial stage of charging and discharging.

In addition to Li, Si, and O, the lithium silicate phase may contain, as a third element, at least one selected from the group consisting of Group I elements (except Li) and Group II elements in the long-form periodic table. The Group I elements and the Group II elements can be, for example, K, Na, Mg, Ca, Sr, Ba, and the like. The lithium silicate phase may further contain Al, B, La, P, Zr, Ti, Fe, Cr, Ni, Mn, Cu, Mo, Zn, and the like.

The ratio (O/Si) of the number of O atoms to the number of Si atoms in the lithium silicate phase is, for example, more than 2 and less than 4. In this case, it is beneficial in terms of the stability and the lithium ion conductivity. The O/Si ratio may be more than 2 and less than 3. The ratio (Li/Si) of the number of Li atoms to the number of Si atoms in the lithium silicate phase is, for example, more than 0 and less than 4.

The composition of the lithium silicate can be represented by a general formula Li_{2z}SiO_{2+z}, where 0 < z < 2. From the viewpoints of the stability, the ease of fabrication, and the lithium ion conductivity of the lithium silicate, z preferably satisfies 0 < z < 1, more preferably z = 1/2.

The second composite particles can be obtained by, for example, mixing lithium silicate with raw material silicon, and stirring and crushing the mixture with a stirrer, such as a ball mill, and then, firing the mixture in an inert atmosphere. The mixture may be sintered, and the sintered product may be pulverized into the second composite particles.

The content ratio of the silicon phases in the second composite particles can be, for example, 35 mass% or more and 80 mass% or less. With the second composite particles, in which the content ratio of the silicon phases can be changed as desired, it is easy to design a high-capacity negative electrode.

The third composite particles (containing a carbon phase and silicon phases dispersed in the carbon phase) are superior in that the irreversible capacity is small among the silicon-containing materials. Furthermore, the carbon phase can exhibit capacity through the Faradaic reaction with lithium ions. Therefore, among the silicon-containing materials, the third composite particles are beneficial for achieving high capacity.

The carbon phase may contain crystalline carbon (graphite), and may contain shapeless carbon with low crystallinity (i.e., amorphous carbon). The amorphous carbon may be a graphitizable carbon, a non-graphitizable carbon, or otherwise.

The third composite particles can be obtained by, for example, mixing a carbon source with raw material silicon, and stirring and crushing the mixture with a stirrer, such as a ball mill, and then, firing the mixture in an inert atmosphere. The mixture may be sintered, and the sintered product may be pulverized into the third composite particles.

As the carbon source, for example, saccharides, water-soluble resins, and the like can be used. For example, as the carbon source, carboxymethyl cellulose (CMC), polyvinylpyrrolidone, cellulose, sucrose, and the like may be used. In mixing the carbon source with the raw material silicon, for example, the carbon source and the raw material silicon may be dispersed in a dispersion medium of a liquid organic substance, such as an alcohol.

The content ratio of the silicon phases in the third composite particles can be, for example, 40 mass% or more and 80 mass% or less. With the third composite particles, in which the content ratio of the silicon phases can be changed as desired, it is easy to design a high-capacity negative electrode.

The average particle diameter of the silicon phases (or silicon particles) in the second composite particles or the third composite particles is, for example, 100 nm or more and 500 nm or less, which may be 400 nm or less, and may be 200 nm or less. When the silicon phases have such a large average particle diameter, it is easy to increase the capacity of these composite particles.

The silicon phases dispersed in the matrix phase of the second composite particles or the third composite particles can be constituted of a plurality of crystallites. The crystallite size may be, for example, 30 nm or less, and may be 25 nm or less. In this case, the changes in volume due to expansion and contraction of the silicon phases during charging and discharging can be reduced as much as possible. The crystallite size is not particularly limited, and may be, for example, 5 µm or more, and may be 10 nm or more.

The crystallite size of the silicon phases is calculated using the Scherrer's equation from the half-value width of the diffraction peak attributed to the Si (111) plane of an X-ray diffraction (XRD) pattern of the silicon phase.

The average particle diameters of the first, second, and third composite materials may be, for example, 2 µm to 10 µm, and may be 4 µm to 7 µm. In this case, the stress caused by the changes in volume of the silicon phases during charging and discharging can be easily relaxed.

The average particle diameter means a particle diameter at 50% cumulative volume (volume average particle diameter) in a particle size distribution measured by, for example, a laser diffraction and scattering method. As the measuring instrument, for example, "LA-750" available from Horiba, Ltd. (HORIBA) can be used. Hereinafter, with respect to the average particle diameter of the carbon material (graphite, etc.), measurement can be made in the similar manner.

The content ratios of the silicon phases in the first, second and third composite materials can be measured by, for example, Si-NMR.

The average particle diameters of the silicon phases in the first, second and third composite materials can be measured from a cross-sectional SEM (scanning electron microscope) photograph of the composite particle. Specifically, the average particle diameter of the silicon phases can be determined by averaging the maximum diameters of randomly selected 100 silicon particles.

The negative electrode mixture layer may contain a mixture of at least one kind of particles selected from the group consisting of the first, second and third composite particles, and particles of a material other than such composite particles.

As the material other than the Si-containing material, a carbon material, a spinel-type lithium titanium oxide, a spinel-type lithium manganese oxide, and the like are preferred. In particular, a carbon material is preferred. The carbon material may be graphite, graphitizable carbon (soft carbon), non-graphitizable carbon (hard carbon), and the like. In particular, graphite is preferred because of its excellent stability during charging and discharging and its low irreversible capacity.

Graphite refers to a carbon material having an interplanar spacing d002 of the (002) plane as measured by X-ray diffractometry of, for example, 0.340 nm or less. The crystallite size Lc(002) of the graphite as measured by X-ray diffraction diffractometry, for example, may be 5 nm or more, may be 5 nm or more and 300 nm or less, and may be 10 nm or more and 200 nm or less.

The average particle diameter of graphite is, for example, 1 µm or more and 30 µm or less.

When graphite and a silicon-containing material are used in combination, the proportion of the silicon-containing material in the negative electrode active material (the total of the graphite and the silicon-containing material) is, for example, 1 mass% or more and 20 mass% or less, may be 3 mass% or more and 15 mass% or less, and may be 3 mass% or more and 10 mass% or less. **In** this case, improved cycle characteristics and high capacity are likely to be achieved in a balanced manner.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include carbons, such as acetylene black, carbon fibers (carbon nanotubes (CNTs), carbon fibers other than CNTs), metal fibers, and metal powders such as aluminum. The conductive agent may be used singly or in combination of two or more kinds.

Examples of the thickener include: cellulose derivatives (cellulose ether, etc.), such as carboxymethyl cellulose (CMC), modified products thereof (including salts such as Na salts), and methylcellulose; and saponified products of a polymer having a vinyl acetate unit, such as polyvinyl alcohol. The thickener may be used singly or in combination of two or more kinds.

The negative electrode current collector that can be used include a non-porous conductive substrate (metal foil, etc.) and a porous conductive substrate (mesh, net, punched sheet, etc.). Examples of the material of the negative electrode current collector include stainless steel, nickel, nickel alloy, copper, and copper alloy. The thickness of the negative electrode current collector is, although not particularly limited to, preferably 1 to 50 µm, more preferably 5 to 20 µm.

### [Separator]

A separator is interposed between the positive electrode and the negative electrode. The separator is excellent in ion permeability and has moderate mechanical strength and electrically insulating properties. As the separator, a microporous thin film, a woven fabric, a nonwoven fabric, and the like can be used.

The separator includes a porous substrate layer, and a protective layer. The protective layer contains resin particles. The protective layer may be provided on one surface of the porous substrate layer, and may be provided on both surfaces of the porous substrate layer. It suffices when the protective layer is provided on a surface which is at least one surface of the separator and faces the first electrode (here, the positive electrode).

The porous substrate layer is, for example, a porous sheet having ion permeability and electrically insulating properties, and specifically, may be a microporous thin film, a woven fabric, a nonwoven fabric, and the like. Examples of the material of the porous substrate layer include, but are not limited to, polyolefin, such as polyethylene, polypropylene, and a copolymer of polyethylene and α-olefin, acrylic resins, polystyrenes, polyesters, celluloses, polyimides, polyphenylene sulfides, polyether ether ketones, and fluorocarbon resins.

As the resin particles, for example, a known polymer that can be used as a binder can be used. Examples of a monomer unit constituting the resin particles (polymer) include an aromatic vinyl monomer unit, a (meth)acrylic acid ester monomer unit, and a fluorine-containing monomer unit. In the present disclosure, the "(meth)acrylic" means acrylic and/or methacrylic. The resin particles (polymer) "containing a monomer unit" means that a polymer obtained using the monomer contains repeating units derived from the monomer.

Examples of the aromatic vinyl monomer that can form an aromatic vinyl monomer unit include, but are not limited to, styrene, α-methylstyrene, styrene sulfonic acid, butoxystyrene, and vinylnaphthalene. Examples of the (meth)acrylic acid ester monomer that can form a (meth)acrylic acid ester monomer unit include: an acrylic acid alkyl ester, such as methyl acrylate, ethyl acrylate, n-propyl acrylate, isopropyl acrylate, butyl acrylate such as n-butyl acrylate and t-butyl acrylate, pentyl acrylate, hexyl acrylate, heptyl acrylate, octyl acrylate such as 2-ethylhexyl acrylate, nonyl acrylate, decyl acrylate, lauryl acrylate, n-tetradecyl acrylate, and stearyl acrylate; and a methacrylic acid alkyl ester, such as methyl methacrylate, ethyl methacrylate, n-propyl methacrylate, isopropyl methacrylate, butyl methacrylate such as n-butyl methacrylate and t-butyl methacrylate, pentyl methacrylate, hexyl methacrylate, heptyl methacrylate, octyl methacrylate such as and 2-ethylhexyl methacrylate, nonyl methacrylate, decyl methacrylate, lauryl methacrylate, n-tetradecyl methacrylate, and stearyl methacrylate.

Examples of the fluorine-containing monomer that can form a fluorine-containing monomer unit include, but are not limited to, vinylidene fluoride, tetrafluoroethylene, hexafluoropropylene, vinyl chloride trifluoride, vinyl fluoride, and perfluoroalkyl vinyl ether.

The resin particles may contain a crosslinkable monomer unit, in addition to the above monomer unit. Here, the crosslinkable monomer unit is a monomer that can form a crosslinked structure during or after polymerization by heating or irradiation with energy rays. Examples of a monomer that can form a crosslinkable monomer unit include a polyfunctional monomer having two or more polymerization reactive groups in the above monomer. Examples of such a polyfunctional monomer include: a divinyl compound, such as allyl methacrylate, and divinylbenzene; a di(meth)acrylic acid ester compound, such as diethylene glycol dimethacrylate, ethylene glycol dimethacrylate, diethylene glycol diacrylate, and 1,3-butylene glycol diacrylate; a tri(meth)acrylic acid ester compound, such as trimethylolpropane trimethacrylate, and trimethylolpropane triacrylate; an ethylenically unsaturated monomer containing an epoxy group, such as allyl glycidyl ether, and glycidyl methacrylate; and the like.

The resin particles can be prepared by polymerizing a monomer composition containing the aforementioned monomer, for example, in an aqueous solvent such as water. The polymerization method is not particularly limited, and may be, for example, a suspension polymerization method, an emulsion polymerization aggregation method, a pulverization method, or the like. As the polymerization reaction, radical polymerization, living radical polymerization, or other polymerization reactions may be used.

In the monomer composition used when preparing resin particles, other blending agents, such as a chain transfer agent, a polymerization regulator, a polymerization reaction retarder, a reactive fluidizing agent, a filler, a flame retardant, an antiaging agent, and a colorant, may be blended in any blending amount.

The protective layer may have a heat-resistant layer containing inorganic particles. In this case, the resin particles are present in a dispersed state in the heat-resistant layer. The average particle diameter (D50) of the resin particles may be larger than the thickness of the heat-resistant layer. In this case, the resin particles having an average particle diameter (D50) larger than the thickness of the heat-resistant layer form protrusions protruding from the surface of the heat-resistant layer.

Although depending on the thickness of the heat-resistant layer, the average particle diameter (D50) of the resin particles is preferably in the range of, for example, 1 µm to 10 µm. In the present specification, D50 means a particle diameter at which the cumulative frequency from the smaller particle diameter reaches 50% in a volume-based particle size distribution, and is also called the median diameter. The particle size distribution of the inorganic particles can be measured using a laser diffraction-type particle size distribution analyzer (e.g., "LA-750" available from Horiba, Ltd. (HORIBA)).

As the inorganic particles contained in the heat-resistant layer, for example, metal oxide particles, metal nitride particles, metal fluoride particles, metal carbide particles, and the like can be used.

Examples of the metal oxide particles include aluminum oxide, titanium oxide, magnesium oxide, zirconium oxide, nickel oxide, silicon oxide, and manganese oxide. Examples of the metal nitride particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide.

The inorganic particles may be a porous aluminosilicate, such as zeolite (M_{2/n}O·Al₂O₃·XSiO₂·yH₂O, where M is a metal element, n is the valence of M, x ≥ 2, and y ≥ 0), a layered silicate, such as talc (Mg₃Si₄O₁₀(OH)₂), a mineral, such as barium titanate (BaTiO₃) and strontium titanate (SrTiO₃), and the like. These may be used singly or in combination of two or more kinds.

The average particle diameter (D50) of the inorganic particles is preferably, for example, in the range of 0.1 µm to 1.0 µm.

The content amount of the inorganic particles in the heat-resistant layer is, for example, preferably in the range of 15 mass% to 85 mass%, more preferably in the range of 30 mass% to 60 mass%, relative to the total mass of the heat-resistant layer.

The thickness of the heat-resistant layer is preferably smaller than the thickness of the porous substrate layer, and is, for example, 0.5 µm to 5 µm.

The heat-resistant layer preferably further contains a binder. The binder has a function of bonding the individual inorganic particles to each other and bonding the inorganic particles to the porous substrate layer. Examples of the binder include a fluorocarbon resins, such as polyvinylidene fluoride (PVDF) and polytetrafluoroethylene (PTFE), polyimide resins, acrylic resins, polyolefin resins, styrene-butadiene rubber (SBR), nitrile-butadiene rubber (NBR), carboxymethyl cellulose (CMC) or a salt thereof, and polyvinyl alcohol (PVA). These may be used singly or in combination of two or more kinds. The content amount of the binder in the heat-resistant layer is preferably 0.5 to 10 mass%, more preferably 1 to 5 mass%, relative to the total mass of the heat-resistant layer.

The content amount of the resin particles which are present in a dispersed state in the heat-resistant layer is preferably in the range of 1 mass% to 15 mass%, more preferably in the range of 3 mass% to 7 mass%, relative to the total mass of the heat-resistant layer, for ensuring good adhesiveness of the separator, for example.

Regarding the protrusions formed by the resin particles, when the surface of a functional layer is viewed in plan, it is preferable that 10 to 35 protrusions are present, and it is more preferable that 15 to 30 protrusions are present within an area of 100 µm×100 µm, for ensuring good adhesiveness of the separator, for example.

The separator having a protective layer containing resin particles can be produced by, for example, mixing resin particles, water as a dispersion medium, and other components (inorganic particles, heat-resistant resin, binder, etc.) as necessary, to prepare a slurry composition for a protective layer, and then, applying the slurry for a protective layer onto a porous substrate layer, followed by drying.

### [Electrolyte]

The electrolyte may be a liquid electrolyte (electrolyte solution), may be a gel electrolyte, and may be a solid electrolyte. The liquid electrolyte is, for example, an electrolyte solution containing a nonaqueous solvent and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. As the matrix polymer, for example, a polymer material that absorbs a nonaqueous solvent and turns into a gel is used. Examples of the polymer material include fluorocarbon resins, acrylic resins, polyether resins, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

For example, a nonaqueous electrolyte in a liquid state is prepared by dissolving a salt in a nonaqueous solvent. The salt is an electrolyte salt that ionically dissociates in the electrolyte, and can include, for example, a lithium salt. The electrolyte can contain various additives. The electrolyte is usually used as it is in a liquid state, but may be in a state in which the fluidity is restricted by a gelling agent or the like.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). A cyclic carbonic acid ester having an unsaturated bond, such as vinylene carbonate (VC), may be used. A cyclic carbonic acid ester having a fluorine atom, such as fluoroethylene carbonate (FEC), may be used. Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lower aliphatic lithium carboxylate, LiCl, LiBr, Lil, borates, and imide salts. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imide salts include lithium bisfluorosulfonylimide (LiN(FSO₂)₂), lithium bistrifluoromethanesulfonyl imide (LiN(CF₃SO₂)₂), lithium trifluoromethanesulfonyl nonafluorobutanesulfonyl imide (LiN(CF₃SO₂)(C₄F₉SO₂)), and lithium bispentafluoroethanesulfonyl imide (LiN(C₂F₅SO₂)₂). The lithium salt may be used singly or in combination of two or more kinds. The concentration of the lithium salt in the nonaqueous electrolyte solution is, for example, 0.5 mol/L or more and 2 mol/L or less.

In an exemplary structure of the secondary battery, an electrode group formed by winding the positive electrode and the negative electrode with the separator interposed therebetween is housed together with an electrolyte in an outer body. However, without limited thereto, other forms of electrode groups may be adopted. For example, a stacked electrode group formed by stacking the positive electrode and the negative electrode together, with the separator interposed therebetween may be used. The form of the secondary battery is also not limited, and may be of, for example, a cylindrical, prismatic, coin, button, or laminate type.

In the following, one example of the secondary battery according to an embodiment of the present disclosure will be specifically described with reference to the drawings. To the components of the below-described examples of the secondary battery, the components as described above can be applied. The components of the below-described examples of the secondary battery can be modified based on the description above. The matters as described below may be applied to the above embodiments. Of the components of the below-described example of the secondary battery, the components which are not essential to the secondary battery according to the present disclosure may be omitted. The figures below are schematic and not intended to accurately reflect the shape and the number of the actual members.

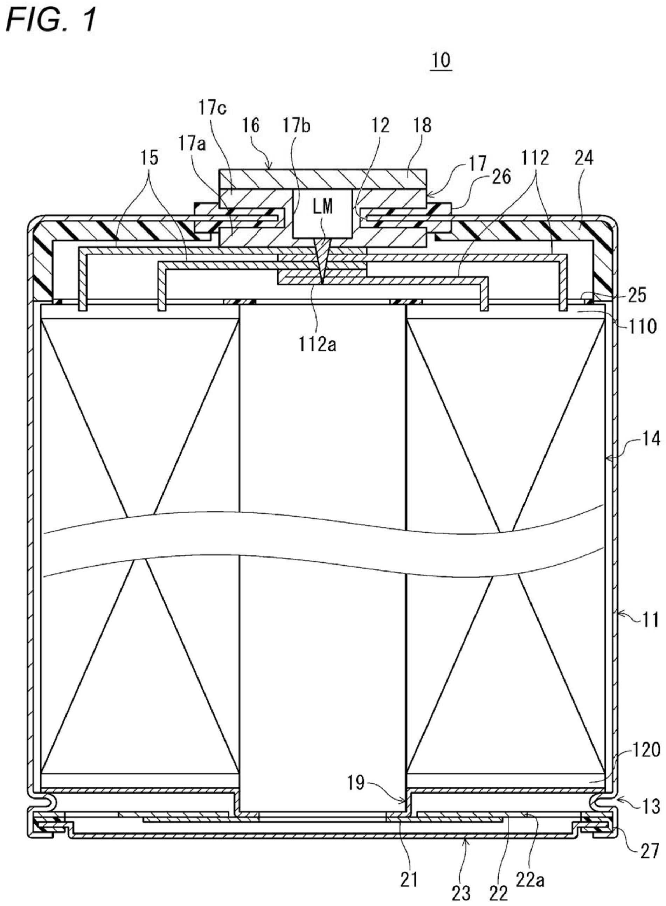

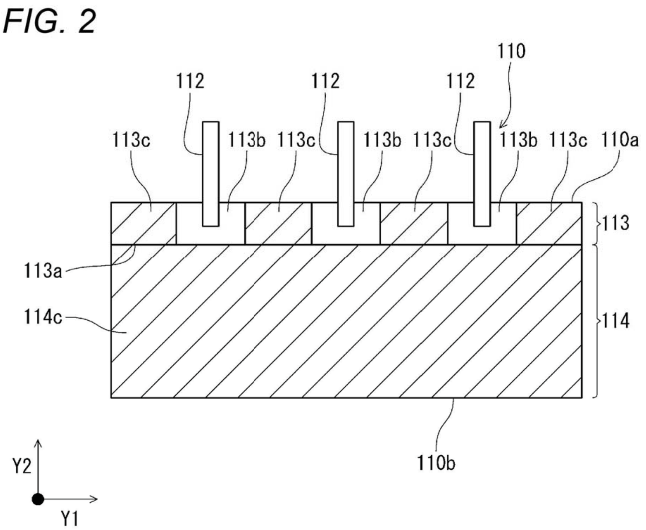

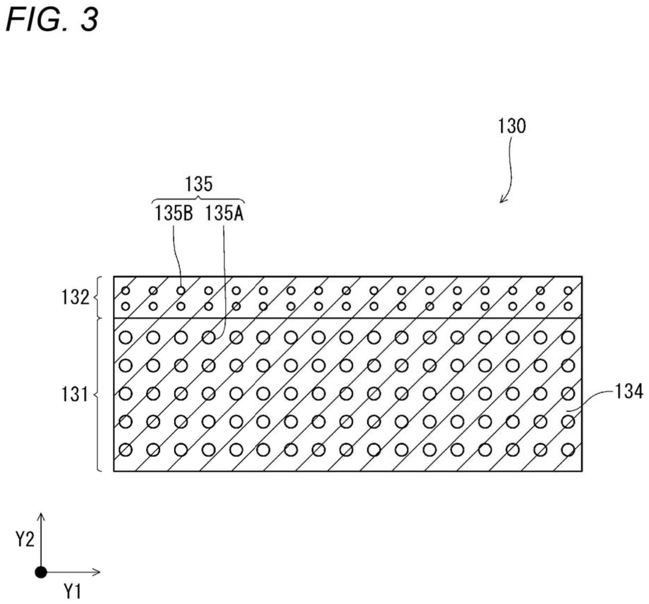

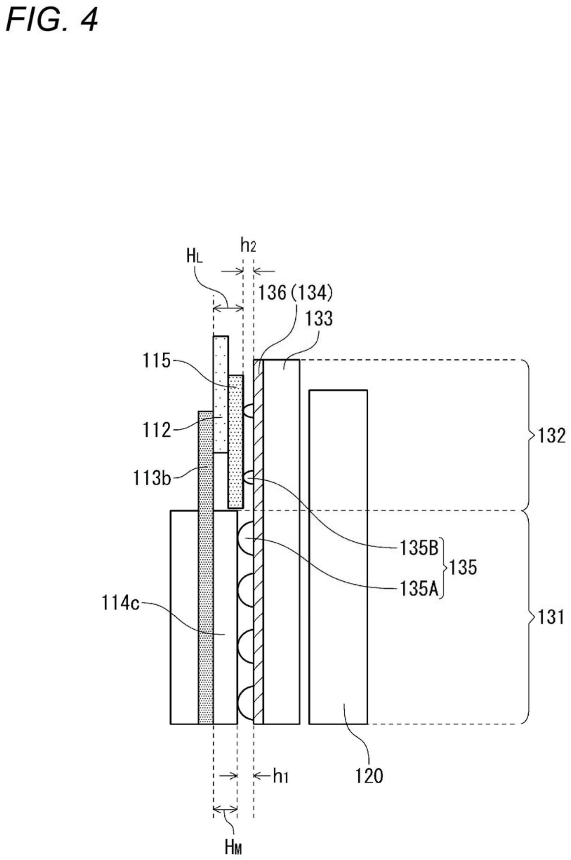

FIG. 1 is a schematic sectional view of a secondary battery 10 according to one example of the present embodiment. FIG. 2 is a schematic plan view of a positive electrode according to one example of an embodiment. FIG. 3 is a schematic plan view of a separator according to one example of an embodiment. FIG. 4 is a schematic sectional view illustrating the positive electrode of FIG. 2 and the separator of FIG. 3 when overlapped together.

The secondary battery 10 may be, for example, a lithium-ion secondary battery or a lithium secondary battery (lithium-metal secondary battery). As illustrated in FIG. 1, the secondary battery 10 includes a non-polar case 11, a wound electrode group 14, a plurality of positive electrode leads 112 constituted of a conductor, a positive electrode terminal 16 constituted of a conductor, an end-face current collecting plate 19 constituted of a conductor, a negative electrode current collecting plate 22 constituted of a conductor, and a sealing plate 23.

The case 11 is formed in a bottomed cylindrical shape having an opening at one end (the lower end in FIG. 1). The case 11 is constituted of a metal. A through-hole 12 for insertion of the positive electrode terminal 16 therethrough is formed in the center of the bottom (the upper end in FIG. 1) of the case 11. The case 11 houses an electrolyte (not shown) together with the electrode group 14. A recessed portion 13 recessed radially inward of the case 11 is formed near the opening of the case 11.

The electrode group 14 has a positive electrode 110 and a negative electrode 120. The electrode group 14 is a wound electrode group formed by winding the positive electrode 110 and the negative electrode 120 together, with a separator (not shown) interposed therebetween. The electrode group 14 is approximately cylindrical in shape as a whole.

One end of each of the plurality of the positive electrode leads 112 is connected to a positive electrode current collector exposed portion 113b in a positive electrode end part 113 of the positive electrode 110. The other end of each of the plurality of the positive electrode leads 112 is arranged so as to stand upright from one end face of the electrode group 14.

The plurality of the positive electrode leads 112 are overlapped with each other and connected to the positive electrode terminal 16 by welding. In the present embodiment, the number of the positive electrode leads 112 is eight, but is not limited thereto. In FIG. 1, only four out of the eight positive electrode leads 112 are shown.

The material of each positive electrode lead 112 is, for example, stainless steel, aluminum, aluminum alloy, nickel, nickel alloy, and the like.

Between the electrode group 14 and the bottom of the case 11, an insulating member 24 for providing electrical insulation therebetween is disposed. The insulating member 24 is constituted of, for example, an insulating resin. The insulating member 24 may be attached to the bottom of the case 11.

The positive electrode terminal 16 is provided opposite to the electrode group 14, across the plurality of the positive electrode leads 112. The positive electrode terminal 16 is inserted into the through-hole 12 in the bottom of the case 11, and penetrated through the bottom of the case 11. The positive electrode terminal 16 is constituted of a metal, and may be a rivet or the like. The positive electrode terminal 16 is insulated from the case 11 by a positive electrode gasket 26 constituted of an electrically insulating material. Between the positive electrode terminal 16 and the electrode group 14, an insulating plate 25 for providing electrical insulation therebetween is disposed.

The positive electrode terminal 16 has a first terminal member 17 extending inside and outside the case 11, and a disc-shaped second terminal member 18 joined to the first terminal member 17 and exposed outside the case 11. The first terminal member 17 has a disc-shaped first portion 17a, a hollow cylindrical second portion 17b formed continuously with the first portion 17a and inserted into the through-hole 12, and a third portion 17c extending radially outward from the end of the second portion 17b and joined to the second terminal member 18. The first terminal member 17 is welded, at the first portion 17a, to the plurality of the positive electrode leads 112 by a laser which is irradiated in the direction from the first terminal member 17 toward the electrode group 14. Thus, the positive electrode terminal 16 is electrically connected to the positive electrode 110 via the plurality of the positive electrode leads 112, and functions as an external positive electrode terminal of the secondary battery 10. The first terminal member 17 is an example of the terminal members.

Of the plurality of the positive electrode leads 112, at least the positive electrode lead 112 closest to the electrode group 14 (the positive electrode lead 112 on the lowermost side in FIG. 1) has a folded portion 112a which is formed by folding a part of the positive electrode lead 112 (specifically, a part on the tip end side) and in which a part of a laser mark LM by the above laser is formed. The folded portion 112a is disposed opposite to the electrode group 14, across the insulating plate 25.

The end-face current collecting plate 19 is constituted of a metal. The end-face current collecting plate 19 may be of any shape, and may be, for example, approximately cross-shaped as a whole. The end-face current collecting plate 19 is electrically connected to the negative electrode 120 of the electrode group 14.

The negative electrode current collecting plate 22 is electrically connected to the end-face current collecting plate 19 via a contact strip 21 made of a metal (which can be formed in a ring shape, for example). Thus, the negative electrode current collecting plate 22 is electrically connected to the negative electrode 120. The negative electrode current collecting plate 22 and the contact strip 21 may be welded to each other (e.g., laser-welded). The contact strip 21 and the end-face current collecting plate 19 may be welded to each other (e.g., laser-welded). The negative electrode current collecting plate 22 may be directly connected to the end-face current collecting plate 19. In this case, the contact strip 21 is not necessary. The negative electrode current collecting plate 22 has one or more injection holes 22a for injecting an electrolyte solution therethrough into the case 11. The negative electrode current collecting plate 22 is welded (e.g., laser-welded) at its outer rim portion, to the aforementioned recessed portion 13 of the case 11. Thus, the case 11 is electrically connected to the negative electrode 120, via the negative electrode current collecting plate 22, etc.

The sealing plate 23 seals the opening of the case 11. The sealing plate 23 is made of a metal and is approximately disc-shaped. The sealing plate 23 is electrically insulated from the case 11 by the negative electrode gasket 27. The sealing plate 23 of the present embodiment is electrically connected neither to the positive electrode 110 nor to the negative electrode 120 of the electrode group 14, but is not limited thereto. The sealing plate 23 has an explosion-proof mechanism (not shown) that operates when the internal pressure of the case 11 exceeds a predetermined value.

The positive electrode 110 illustrated in FIG. 2 is in a state before wound into the electrode group 14. **In** FIG. 2, the arrow Y1 indicates the winding direction of the positive electrode 110 in forming the electrode group 14, and corresponds to the longitudinal direction of the positive electrode 110. Also, in FIG. 2, the arrow Y2 perpendicular to the arrow Y1 indicates the winding axis direction of the positive electrode 110 (i.e., the winding axis direction of the electrode group 14), and corresponds to the lateral direction of the positive electrode 110.

The positive electrode 110 has, as illustrated in FIG. 2, a positive electrode end part (second region) 113 including one end 110a in the lateral direction of the positive electrode 110, and a positive electrode main part 114 other than the positive electrode end part 113. The positive electrode main part 114 is a region from a positive electrode center-side end 113a of the positive electrode end part 113 to the other end 110b in the lateral direction of the positive electrode 110. A ratio of the width (length in the lateral direction) of the positive electrode end part 113 to the width (length in the lateral direction) of the positive electrode main part 114 is, for example, in the range of 1:15 to 3:4 or 1:12 to 1:7.

The positive electrode end part 113 of the positive electrode 110 has a positive electrode current collector exposed portion 113b where the positive electrode mixture layer is not disposed on the positive electrode current collector, and a first positive electrode mixture portion 113c where the positive electrode mixture layer is disposed on the positive electrode current collector. The positive electrode main part 114 has a second positive electrode mixture portion 114c where the positive electrode mixture layer is disposed on the positive electrode current collector.

The positive electrode current collector exposed portion 113b is provided intermittently at a plurality of positions (e.g., eight positions) along the longitudinal direction of the positive electrode current collector. The exposed portion 113b is without the positive electrode mixture layer from the one end 110a in the lateral direction of the positive electrode 110 through to the positive electrode main part 114.

The length of the positive electrode current collector exposed portion 113b per one position in the longitudinal direction of the positive electrode current collector may be 1% to 10% of the length in the longitudinal direction of the positive electrode current collector, and the total length of all the positive electrode current collector exposed portions 113b in the longitudinal direction of the positive electrode current collector may be 5% to 30% or 8% to 20% of the length in the longitudinal direction of the positive electrode current collector.

It is desirable that the intervals between the positive electrode current collector exposed portions 113b adjacent to each other are as equal as possible. For example, given that the length of the positive electrode current collector is denoted by L, and the number of the positive electrode current collector exposed portions 113b is denoted by n, the intervals between the positive electrode current collector exposed portions 113b adjacent to each other may be 0.8×L/n to 1.2×L/n.

The tab-shaped positive electrode lead 112 is connected to each of the positive electrode current collector exposed portions 113b. The plurality of the positive electrode leads 112 are bundled and connected to the first portion 17a of the first terminal member 17. Although not shown in FIG. 2, the connection portions where the positive electrode leads 112 are connected to the exposed portion 113b can be protected by being covered with a protective tape.

The negative electrode 120, like the positive electrode 110, on the other end side in the lateral direction, has a negative electrode current collector exposed portion on which the negative electrode mixture layer is not disposed on the negative electrode current collector. The negative electrode current collector exposed portion is formed along the longitudinal direction of the negative electrode current collector. Accordingly, the negative electrode current collector exposed portion is exposed at the other end face of the electrode group 14. However, as shown in FIG. 1, the negative electrode current collector exposed portion is connected to the end-face current collecting plate 19 by, for example, laser welding, without a negative electrode lead separately interposed therebetween.

As illustrated in FIG. 3, the separator 130 is divided into a first region 131 and a second region 132 at a certain position in the lateral direction (width direction). The second region 132 includes a region that faces the positive electrode end part 113 when the electrode group 14 is formed, and does not include a region that faces the positive electrode main part 114. The first region 131 is a portion of the separator 130 other than the second region 132, and includes a region that faces the positive electrode main part 114.

Resin particles 135 (135A, 135B) are exposed on the surface of the separator 130. On the other hand, the exposed area of the resin particles 135A exposed in the first region 131 of the separator 130 is larger than the exposed area of the resin particles 135B exposed in the second region 132.

As illustrated in the sectional view of FIG. 4, the separator 130 has a porous substrate layer 133 and a protective layer 134 covering the porous substrate layer 133. The protective layer 134 has the resin particles 135 (135A, 135B) and a heat-resistant layer 136 containing inorganic particles. The average particle diameters of the resin particles 135A and 135B are larger than the thickness of the heat-resistant layer 136. Accordingly, part of each of the resin particles 135A and 135B is exposed from the heat-resistant layer 136, forming protrusions on the surface of the separator 130.

The average particle diameter of the resin particles 135A is larger than the average particle diameter of the resin particles 135B. Therefore, the height h1 of the protrusions that the resin particles 135A form is higher than the height h2 of the protrusion that the resin particles 135B form. Furthermore, the exposed area of the resin particles 135A is larger than the exposed area of the resin particles 135B.

When a compressive stress is applied to the separator during charging and discharging, the resin particles 135A come in contact with the second positive electrode mixture portion 114c formed in the positive electrode main part 114. Regarding the resin particles 135B, at least part thereof can come in contact with the positive electrode lead 112 provided in the positive electrode end part 113 or the protective tape 115 covering the positive electrode lead 112. In the positive electrode end part 113, the thickness H_{L} of the positive electrode lead 112 and the protective tape 115 is thicker than the thickness H_{M} of the second positive electrode mixture portion 114c in the positive electrode main part 114. However, since the protrusion height h2 of the resin particles 135B is lower than the protruding height h1 of the resin particles 135A, the total thickness of the separator and the positive electrode when overlapped together can be made approximately consistent between the positive electrode main part 114 and the positive electrode end part 113, as illustrated in FIG. 4. By this, even when a compressive stress is applied to the separator, the bending or folding of the porous substrate layer 133 can be suppressed, and the breakage of the separator 130 can be suppressed.

### (Supplementary notes)

The above description discloses the following techniques.

### (Technique 1)

A secondary battery, comprising:
a first electrode, a second electrode, an electrolyte, and a separator, wherein:
the first electrode and the second electrode are overlapped together, with the separator interposed between the first electrode and the second electrode;
the first electrode includes a belt-shaped current collector, and a mixture layer disposed on the current collector;
the first electrode has an end part including one end in a width direction, and a main part other than the end part, the end part having an exposed portion where the current collector is exposed without the mixture layer formed on a surface of the current collector;
the separator includes a porous substrate layer, and a protective layer configured to contain resin particles and covering the porous substrate layer; and
when the separator is divided in two in the width direction, into a first region facing the main part and a second region facing the end part,
an exposed area A1 per one resin particle exposed on a surface of the separator in the first region is larger than an exposed area A2 per one resin particle exposed on the surface of the separator in the second region.

### (Technique 2)

The secondary battery according to technique 1, wherein
the exposed area A1 is 1 µm² or more and 80 µm² or less, and
a ratio A1/A2 of the exposed area A1 to the exposed area A2 is 1.5 or more and 4 or less.

### (Technique 3)

The secondary battery according to technique 1 or 2, wherein
the protective layer has a heat-resistant layer containing inorganic particles,
the resin particles are present in a dispersed state in the heat-resistant layer, and
at least part of the resin particle is protruded from the heat-resistant layer and exposed on the surface of the separator, forming a protrusion.

### (Technique 4)

The secondary battery according to technique 3, wherein a protruding height of the resin particles exposed in the first region of the separator is 0.1 µm or more and 10 µm or less.

### (Technique 5)

The secondary battery according to any one of techniques 1 to 4, wherein the first electrode is the positive electrode.

### [Examples]

The present invention will be more specifically described below with reference to Examples and Comparative Examples. The present invention, however, is not limited to the following Examples.

### <Example 1>

### [Production of positive electrode]

N-methyl-2-pyrrolidone (NMP) was added in an appropriate amount to a positive electrode mixture, to prepare a positive electrode slurry. The positive electrode mixture used here was a mixture of a lithium-containing composite oxide serving as a positive electrode active material, carbon black serving as a conductive agent, and polyvinylidene fluoride (PVDF) serving as a binder. For the lithium-containing composite oxide, LiNi_{0.8}Co_{0.1}Mn_{0.1}O₂ was used. In the positive electrode mixture, the mass ratio of the lithium-containing composite oxide, carbon black, and PVDF was 98:1:1.

The positive electrode slurry was applied onto both surfaces of an aluminum foil serving as a positive electrode current collector, and the applied films were dried, and rolled, into positive electrode mixture layers, to obtain a positive electrode as illustrated in FIG. 2. Specifically, the positive electrode slurry was intermittently applied in a predetermined thickness on one end side of the lateral direction of the aluminum foil along the longitudinal direction of the positive electrode current collector, dried, and rolled, to form a positive electrode end part having first positive electrode mixture portions. In addition, the positive electrode slurry was applied in a predetermined thickness onto the positive electrode current collector other than the positive electrode end part, dried, and rolled, to form a positive electrode main part having a second positive electrode mixture portion. The first positive electrode mixture portions and the second positive electrode mixture portion were rolled simultaneously. In the positive electrode end part, eight exposed portions of the positive electrode current collector were provided, and a positive electrode lead was attached to each of the exposed portions. The width of the positive electrode end part was set to 1/5 of the width of the positive electrode main part.

### [Preparation of negative electrode]

Water was added in an appropriate amount to a negative electrode mixture, to prepare a negative electrode slurry. The negative electrode mixture used here was a mixture of SiOₓ where x = 1.0 serving as a negative electrode active material, graphite serving as a negative electrode active material, styrene-butadiene copolymer rubber (SBR) serving as a binder, and carboxymethyl cellulose (CMC) serving as a thickener. In the negative electrode mixture, the mass ratio of the negative electrode active material (total of SiOₓ and graphite), SBR, and CMC was 98:1:1. The mass ratio of SiOₓ and graphite in the negative electrode active material was 5:95.

The negative electrode slurry was applied onto both surfaces of a copper foil serving a negative electrode current collector, and the applied films were dried. Then, the applied films were rolled using a roller, and cut into a predetermined electrode size, to produce a negative electrode with a negative electrode mixture layer formed on each of both surfaces of the negative electrode current collector. Here, a part of the other end side of the negative electrode current collector in its lateral direction was left as an exposed part.

### [Production of separator]

A porous substrate of 12 µm thick made of polyethylene with was prepared. A slurry for a protective layer was prepared by mixing α-Al₂O₃ powder (inorganic particles) having an average particle size (D50) of 0.8 µm, acrylic resin particles made of a copolymer of 2-ethylhexyl acrylate and styrene, and an acrylic binder (binding agent), in a solid content mass ratio of 100:6:5, to which an appropriate amount of water was added such that the solid content concentration was 10 mass%.

For the slurry for a protective layer, several kinds of slurries were prepared which differed in the average particle size (D50) of the acrylic resin particles contained therein. That is, a first slurry for a protective layer containing first acrylic resin particles, and a second slurry for a protective layer containing second acrylic resin particles having an average particle size different from that of the first acrylic resin particles were prepared.

The first slurry for a protective layer was applied onto a first region on one surface of the porous substrate using a microgravure coater. Then, the second slurry for a protective layer was applied onto a second region on the one surface of the porous substrate using a microgravure coater. The first region is a region that faces the main part of the positive electrode when constituted into an electrode group. The second region is a region that faces the positive electrode end part when constituted into an electrode group.

The applied films of the first and second slurries for a protective layer were heated and dried in an oven at 50 °C for 4 hours, to produce a separator in which a heat-resistant layer and a protective layer having resin particles dispersed in the heat-resistant layer were formed on one surface of the porous substrate. The heat-resistant layer was formed such that the thickness was 2 µm in both the first region and the second region.

The observation on the surface of the protective layer of the separator with a scanning electron microscope found the presence of a plurality of protrusions of the resin particles protruding from the heat-resistant layer. The exposed area of the protrusion per one resin particle was determined in each of the first and second regions by the alreadydescribed method.

### [Preparation of electrolyte]

To a nonaqueous solvent of ethylene carbonate (EC) and dimethyl carbonate (DMC) mixed in a volume ratio of 1:3, vinylene carbonate (VC) was added, in which LiPF₆ was dissolved, to prepare an electrolyte. The content of the VC in the whole electrolyte was 5 mass%. The concentration of LiPF₆ in the electrolyte was 1.5 mol/L.

### [Fabrication of secondary battery]

In an inert gas atmosphere, the positive electrode and the negative electrode were wound together, with a separator (microporous membrane made of polyethylene) interposed therebetween, to form an electrode group. The electrodes were overlapped such that the end part of the positive electrode was arranged on one end face side of the electrode group, and the exposed part of the negative electrode current collector was arranged on the other end face side of the electrode group. With the separator arranged such that the surface on which the protective layer was formed facing the positive electrode, the positive electrode and the separator were overlapped such that the first region of the separator was overlapped with the main part of the positive electrode and the second region thereof was overlapped with the end part of the positive electrode. Using the electrode group and the electrolyte, a cylindrical lithium-ion secondary battery as illustrated in FIG. 1 was completed.

A plurality of positive electrode leads were bundled and electrically connected to a first portion of a first terminal member.

The exposed portion of the negative electrode current collector was connected to an end-face current collector by laser welding, and the end-face current collector was electrically connected to the negative electrode current collector via a contact strip.

### [Evaluation]

Secondary batteries of Examples and Comparative Examples were fabricated, which were, in a 25 °C temperature environment, subjected to a constant-current charge at 0.2 C, and at the stage when the battery voltage reached 4.2 V, subjected to a constantvoltage charge until the charge current reached 0.02 C. After a rest for 10 minutes, a constant-current discharge was performed at 0.2 C until the battery voltage reached 2.5 V. With this charge and discharge counted as one cycle, 100 cycles were performed.

The separator taken out from the secondary battery after the charge-discharge test was observed, to confirm the state of a compression mark near the boundary between the first region and the second region.

### <Examples 2 to 5, Comparative Examples 1 and 2>

In Examples 2 to 5 and Comparative Example 2, in the production of separator, the first slurry for a protective layer and the second slurry for a protective layer were prepared by changing the average particle diameter of the first acrylic resin particles and/or the average particle diameter of the second acrylic resin particles from those in Example 1. Except for the above, in the same manner as in Example 1, a separator was prepared, and a lithium-ion secondary battery was completed using the separator.

In Comparative Example 1, a slurry for a protective layer containing no acrylic resin particles was applied onto the entire surface of one side of the porous substrate, and the applied film was heated to dry in an oven at 50 °C for 4 hours, to prepare a separator in which a protective layer (heat-resistant layer) not containing acrylic resin particles and having a thickness of 2 µm was formed on one surface of the porous substrate, and a lithium-ion secondary battery was completed using the separator.

The evaluation results are shown in Table 1. In Table 1, secondary batteries A1 to A5 correspond to Examples 1 to 5, respectively. Secondary batteries B1 and B2 correspond to Comparative Examples 1 and 2, respectively. In Table 1, the exposed area A1 per one resin particle in the first region, the exposed area A2 per one resin particle in the second region, and the ratio A1/A2 of the exposed area A1 to the exposed area A2 in each battery are shown together with the evaluation results.

The evaluation of the compression mark was conducted by visually observing the state of the separator near the boundary between the first region and the second region. The greater the compression degree of the separator is, the darker compression mark appears. First, the compression mark was classified into two levels, "dark" and "light," depending on whether or not the discoloration of the separator was visually observable. Furthermore, depending on the thickness of the porous substrate at the compression mark, the "dark" was divided into two levels, "very dark" and "slightly dark," and "light" was divided into two levels, "very light" and "slightly light," so that evaluation was made in four levels in total.

**[Table 1]**

| | resin particles | | | compression mark |
|---|---|---|---|---|
| | exposed area A1 | exposed area A2 | A1/A2 | |
| | (µm²) | (µm²) | | |
| A1 | 3.6 | 1.0 | 3.6 | slightly light |
| A2 | 10.3 | 3.5 | 2.9 | slightly light |
| A3 | 12.3 | 5.7 | 2.2 | slightly light |
| A4 | 50.4 | 30.8 | 1.6 | very light |
| A5 | 70.3 | 33.4 | 2.1 | very light |
| B1 | - | - | - | very dark |
| B2 | 3.4 | 3.7 | 0.92 | slightly dark |

Table 1 shows that when the exposed area A1 was larger than exposed area A2, the compression mark was light, and the breakage of the separator can be suppressed.

### [Industrial Applicability]

The secondary battery according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery
11: case
12: through-hole
13: recessed portion
14: electrode group
16: positive electrode terminal
   17: first terminal member (terminal member)
      17a: first portion
      17b: second portion
      17c: third portion
   18: second terminal member
19: end-face current collecting plate
21: contact strip
22: negative electrode current collecting plate
   22a: injection hole
23: sealing plate
24: insulating member
25: insulating plate
26: positive electrode gasket
27: negative electrode gasket
LM: laser mark
110: positive electrode
   110a one end
   110b other end
   112 positive electrode lead
   112a: folded portion
   113 positive electrode end part
   113a positive electrode center-side end
   113b positive electrode current collector exposed portion
   113c first positive electrode mixture portion
   114 positive electrode main part
   114c second positive electrode mixture portion
   115 protective tape
120: negative electrode
130: separator
   131 first region
   132 second region
   133 porous substrate layer
   134 protective layer
   135, 135A, 135B resin particle
   136 heat-resistant layer

## Claims

1. A secondary battery, comprising:
a first electrode, a second electrode, an electrolyte, and a separator, wherein:
the first electrode and the second electrode are overlapped together, with the separator interposed between the first electrode and the second electrode;
the first electrode includes a belt-shaped current collector, and a mixture layer disposed on the current collector;
the first electrode has an end part including one end in a width direction, and a main part other than the end part, the end part having an exposed portion where the current collector is exposed without the mixture layer formed on a surface of the current collector;
the separator includes a porous substrate layer, and a protective layer configured to contain resin particles and covering the porous substrate layer; and
when the separator is divided in two in the width direction, into a first region facing the main part and a second region facing the end part,
an exposed area A1 per one resin particle exposed on a surface of the separator in the first region is larger than an exposed area A2 per one resin particle exposed on the surface of the separator in the second region.

2. The secondary battery according to claim 1, wherein
the exposed area A1 is 1 µm² or more and 80 µm² or less, and
a ratio A1/A2 of the exposed area A1 to the exposed area A2 is 1.5 or more and 4 or less.

3. The secondary battery according to claim 1 or 2, wherein
the protective layer has a heat-resistant layer containing inorganic particles,
the resin particles are present in a dispersed state in the heat-resistant layer, and
at least part of the resin particle is protruded from the heat-resistant layer and exposed on the surface of the separator, forming a protrusion.

4. The secondary battery according to claim 3, wherein a protruding height of the resin particles exposed in the first region of the separator is 0.1 µm or more and 10 µm or less.

5. The secondary battery according to claim 1 or 2, wherein the first electrode is the positive electrode.
